(19) **Europäisches Patentamt / European Patent Office / Office européen des brevets**

(11) **EP 4 039 403 A1**

(12) **DEMANDE DE BREVET EUROPEEN**

(43) Date de publication:
**10.08.2022 Bulletin 2022/32**

(21) Numéro de dépôt: **22157503.8**

(22) Date de dépôt: **17.04.2015**

(51) Classification Internationale des Brevets (IPC):
**B23K 26/26** *(2014.01)* **B23K 26/32** *(2014.01)*
**B23K 26/30** *(2014.01)* **B23K 26/322** *(2014.01)*
**B23K 26/60** *(2014.01)* **B23K 9/173** *(2006.01)*
**B23K 26/211** *(2014.01)* **B23K 26/348** *(2014.01)*
**B23K 26/361** *(2014.01)* **B23K 26/40** *(2014.01)*
**B23K 28/02** *(2014.01)* **B23K 9/167** *(2006.01)*
B23K 101/00 *(2006.01)* B23K 101/18 *(2006.01)*
B23K 101/34 *(2006.01)* B23K 103/04 *(2006.01)*
B23K 103/08 *(2006.01)* B23K 103/00 *(2006.01)*

(52) Classification Coopérative des Brevets (CPC):
**B23K 26/60; B23K 9/167; B23K 9/173;**
**B23K 26/211; B23K 26/26; B23K 26/322;**
**B23K 26/348; B23K 26/361; B23K 26/40;**
**B23K 28/02;** B23K 2101/006; B23K 2101/18;
B23K 2101/34; B23K 2103/04; B23K 2103/08

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.04.2014 PCT/IB2014/000612**

(62) Numéro(s) de document de la (des) demande(s) initiale(s) en application de l'article 76 CBE:
**19155807.1 / 3 501 724**
**15722763.8 / 3 134 225**

(71) Demandeur: **ArcelorMittal**
**1160 Luxembourg (LU)**

(72) Inventeurs:
• **SCHMIT, Francis**
**60600 Clermont (FR)**

• **VIERSTRAETE, René**
**78600 Maisons-Laffitte (FR)**
• **YIN, Qingdong**
**60761 Montataire (FR)**
• **EHLING, Wolfram**
**9000 Gent (BE)**

(74) Mandataire: **Lavoix**
**2, place d'Estienne d'Orves**
**75441 Paris Cedex 09 (FR)**

Remarques:
Cette demande a été déposée le 18-02-2022 comme demande divisionnaire de la demande mentionnée sous le code INID 62.

(54) **PROCÉDÉ DE FABRICATION D'UN FLANC SOUDÉ ; FLAN SOUDÉ ; DISPOSITIF DE FABRICATION DE FLANS SOUDÉS ; ET UTILISATION D'UNE PIÈCE EN ACIER FABRIQUÉ À PARTIR D'UN TEL FLAN SOUDÉ**

(57) L'invention concerne un procédé de préparation de tôles (11, 12) destinées à la fabrication d'un flan soudé d'acier, comprenant les étapes suivantes : on approvisionne au moins une première (11) et une seconde (12) tôles d'acier pré-revêtues, constituées d'un substrat en acier et d'un pré-revêtement constitué d'une couche d'alliage intermétallique en contact avec ledit substrat en acier, surmontée d'une couche métallique d'aluminium ou d'alliage d'aluminium ou à base d'aluminium, la tôle (11) comprenant une face principale, une face principale opposée, et au moins une face secondaire, la tôle (12) comprenant une face principale, une face principale opposée, et au moins une face secondaire), puis on accoste la première (11) et seconde (12) tôle, en laissant un jeu compris entre 0,02 et 2 mm entre les faces secondaires placées en regard, l'accostage de la première (11) et seconde tôle (12) définissant un plan médian perpendiculaire aux faces principales des tôles (11, 12), puis on enlève simultanément par fusion et vaporisation, sur la face principale et la face principale, la couche d'alliage métallique dans une zone périphérique (61) de la tôle (11), et la couche d'alliage métallique dans une zone périphérique (62) de la tôle (12), les zones périphériques (61, 62) étant les zones des faces principales les plus proches par rapport audit plan médian situées de part et d'autre par rapport à celui-ci.

EP 4 039 403 A1

**(Cont. page suivante)**

Fig. 4

## Description

L'invention concerne principalement un procédé de préparation de tôles d'acier aluminiées destinées à être soudées.

L'invention concerne également un procédé de fabrication de flans soudés, à partir des tôles d'aciers aluminiées ci-dessus.

L'invention concerne encore principalement un procédé de fabrication de pièces durcies sous presse à partir de flans soudés ci-dessus, en vue de leur utilisation comme pièces de structures ou de sécurité dans des véhicules automobiles.

Il est connu de fabriquer des pièces d'acier soudées à partir de flans d'aciers de composition et/ou d'épaisseur différentes soudés entre eux bout à bout en continu. Selon un premier mode de fabrication connu, ces flans soudés sont mis en forme à froid, par exemple par emboutissage à froid. Selon un second mode de fabrication connu, ces flans soudés sont chauffés à une température permettant l'austénitisation de l'acier puis déformés à chaud et refroidis rapidement au sein de l'outillage de mise en forme. La présente invention se rapporte à ce second mode de fabrication.

La composition de l'acier est choisie pour permettre de réaliser les étapes de chauffage et de déformation à chaud, et pour conférer à la pièce soudée finale une résistance mécanique élevée, une grande résistance aux chocs ainsi qu'une bonne tenue à la corrosion. De telles pièces d'acier trouvent notamment des applications dans l'industrie automobile et plus particulièrement pour la fabrication de pièces anti-intrusion, de pièces de structure ou de pièces participant à la sécurité des véhicules automobiles grâce à leur capacité d'absorption de chocs.

Parmi les aciers présentant les caractéristiques requises pour les applications mentionnées précédemment, la tôle d'acier revêtue faisant l'objet de la publication EP971044 comporte notamment un pré-revêtement d'alliage d'aluminium ou à base d'aluminium. La tôle est revêtue, par exemple au trempé en continu, dans un bain comportant, outre de l'aluminium, du silicium et du fer avec des teneurs contrôlées. Après la mise en forme à chaud et refroidissement, on peut obtenir une microstructure majoritairement martensitique, la résistance mécanique en traction pouvant dépasser 1500 MPa.

Un procédé de fabrication connu de pièces d'acier soudées consiste à approvisionner au moins deux tôles d'acier selon la publication EP971044, à souder en bout à bout ces deux tôles pour obtenir un flan soudé, éventuellement à réaliser une découpe de ce flan soudé, puis à chauffer le flan soudé avant de réaliser une déformation à chaud, par exemple par emboutissage à chaud, de façon à conférer à la pièce d'acier la forme requise pour son application.

Une technique de soudage connue est le soudage par faisceau Laser. Cette technique présente des avantages en termes de souplesse, de qualité et de productivité comparés à d'autres techniques de soudage telles que le soudage à la molette ou le soudage à l'arc. Cependant, dans les procédés d'assemblage comportant une étape de fusion, le pré-revêtement à base d'aluminium constitué d'une couche d'alliage intermétallique en contact avec le substrat en acier, surmonté d'une couche d'alliage métallique, est dilué au cours de l'opération de soudage avec le substrat d'acier au sein de la zone fondue qui est la zone portée à l'état liquide pendant l'opération de soudage et qui se solidifie après cette opération de soudage en formant la liaison entre les deux tôles.

Deux phénomènes peuvent alors intervenir :

- selon un premier phénomène, une augmentation de la teneur en aluminium dans le métal fondu, résultant de la dilution d'une partie du pré-revêtement au sein de cette zone, conduit à la formation de composés intermétalliques. Ceux-ci peuvent être des sites d'amorçage de la rupture en cas de sollicitation mécanique.

- selon un second phénomène, l'aluminium, élément alphagène en solution solide dans la zone fondue, retarde la transformation en austénite cette zone lors de l'étape de chauffage précédant l'emboutissage à chaud. Dès lors, il n'est plus possible d'obtenir dans la zone fondue une structure complètement trempée après le refroidissement qui suit la mise en forme à chaud, et le joint soudé comporte de la ferrite. La zone fondue présente alors une dureté et une résistance mécanique en traction moindres que les deux tôles adjacentes.

Pour éviter le premier phénomène décrit ci-dessus, la publication EP2007545 décrit un procédé qui consiste à ôter à la périphérie des tôles destinées à subir l'opération de soudage, la couche d'alliage métallique superficielle en laissant la couche d'alliage intermétallique. Cet enlèvement peut être réalisé par brossage, usinage mécanique ou par l'impact d'un faisceau Laser. Dans ce dernier cas, la largeur de la zone d'enlèvement est définie grâce au déplacement longitudinal d'un faisceau Laser d'une certaine largeur, voire par oscillation d'un faisceau Laser de taille plus petite que cette largeur, prenant comme point de référence le bord de la tôle. La couche d'alliage intermétallique est maintenue pour garantir une résistance à la corrosion satisfaisante et pour éviter les phénomènes de décarburation et d'oxydation lors du traitement thermique qui précèdent l'opération de mise en forme.

Pour éviter le second phénomène mentionné ci-dessus, la publication WO2013014512 décrit un procédé qui consiste, outre l'enlèvement de la couche métallique décrit ci-dessus, à éliminer l'aluminium présent sur la tranche des tôles avant soudage, dont la présence peut résulter d'une opération de découpe, et à réaliser un joint soudé avec un fil d'apport de matière de façon à augmenter la teneur en carbone de la zone fondue, dans des proportions spécifiques.

Dans les procédés des publications ci-dessus, lorsque l'enlèvement de la couche d'alliage métallique résulte d'un phénomène comportant une fusion, tel qu'un enlèvement par faisceau Laser, on constate la présence plus ou moins importante d'aluminium ayant coulé sur la tranche (celle-ci étant appelée également face secondaire) de la tôle. Un soudage ultérieur conduit à son incorporation par dilution dans la zone fondue et aboutit à des joints soudés dont la résistance mécanique et/ou la ténacité sont inférieures à celle du métal de base.

Les différents procédés d'enlèvement de l'écoulement d'aluminium sur la tranche par usinage, raclage, ablation par Laser pulsé, sont délicats à mettre en œuvre en raison d'un positionnement difficile du flan par rapport à l'outil ou au faisceau, à l'encrassement rapide des outils lorsque l'enlèvement se fait par un moyen mécanique, ou à la projection éventuelle d'aluminium sur les faces préparées dans le cas d'une ablation par Laser sur la tranche.

Par ailleurs, après l'enlèvement de la couche métallique d'aluminium sur la périphérie des tôles, le matériau sous-jacent a un aspect plus terne et plus sombre. On sait que le soudage Laser requiert un positionnement très précis du faisceau par rapport au plan de joint formé par les tôles à assembler. Ce positionnement et guidage du faisceau, ou « suivi de joint », est usuellement réalisé grâce à des capteurs susceptibles de détecter la variation, dans une direction transverse au joint soudé, d'un faisceau de lumière réfléchie, le plan de joint apparaissant nettement plus sombre. Or la mise en place côte-à-côte avant soudage de deux tôles dont l'ablation périphérique de la couche métallique a été réalisée, ne conduit qu'à une faible variation de contraste au niveau du plan d'accostage si bien qu'il est malaisé de détecter celui-ci et que le guidage du faisceau Laser est alors réalisé avec une moins grande précision.

On recherche donc un procédé de préparation des zones périphériques de tôles pré-revêtues d'aluminium qui ne présenterait pas les inconvénients décrits ci-dessus.

On recherche un procédé de préparation économique qui permettrait d'éliminer l'opération coûteuse et délicate du nettoyage de l'aluminium ou de l'alliage d'aluminium ayant coulé sur la face secondaire à la suite d'une ablation par fusion et vaporisation.

On recherche également un procédé de préparation qui garantirait une teneur en aluminium inférieure à 0,3% dans le joint soudé réalisé à partir de tôles pré-revêtues en aluminium ou en alliage d'aluminium.

On recherche encore un procédé améliorant la précision du suivi de joint lors du soudage de tôles pré-revêtues d'aluminium ou d'alliage d'aluminium dont la couche métallique a été ôtée sur la périphérie.

La présente invention a pour but de résoudre les problèmes évoqués ci-dessus. Dans ce but, l'invention a pour objet un procédé de préparation de tôles destinées à la fabrication d'un flan soudé d'acier, comprenant les étapes successives selon lesquelles :

- on approvisionne au moins une première 11 et une seconde 12 tôles d'acier pré-revêtues, constituées d'un substrat en acier 25,26, et d'un pré-revêtement 15,16 constitué d'une couche d'alliage intermétallique 17,18 en contact avec le substrat en acier, surmontée d'une couche métallique d'aluminium ou d'alliage d'aluminium ou à base d'aluminium 19,20, la première tôle 11 comprenant une face principale 111, une face principale opposée 112, et au moins une face secondaire 71, la seconde tôle 12 comprenant une face principale 121, une face principale opposée 122, et au moins une face secondaire 72, puis

- on accoste les première 11 et seconde 12 tôles, en laissant un jeu 31 compris entre 0,02 et 2 mm entre les faces secondaires 71 et 72 placées en regard, l'accostage des première 11 et seconde tôles 12 définissant un plan médian 51 perpendiculaire aux faces principales de la première 11 et seconde tôle 12, puis

- on enlève par fusion et vaporisation, simultanément sur les faces principales 111 et 121, la couche d'alliage métallique 19 dans une zone périphérique 61 de la tôle 11, et la couche d'alliage métallique 20 dans une zone périphérique 62 de la tôle 12, les zones périphériques 61 et 62 étant les zones des faces principales 111 et 121 les plus proches par rapport au plan médian 51 situées de part et d'autre par rapport à celui-ci.

Préférentiellement, l'enlèvement simultané par fusion et vaporisation est réalisé par un faisceau Laser chevauchant ledit plan médian 51.

La largeur de la zone périphérique 61 et la largeur de la zone périphérique 62 sont préférentiellement comprises entre 0,25 et 2,5 mm.

Selon un mode particulier, la largeur de la zone périphérique 61 et la largeur de la zone périphérique 62 sont égales.

Selon un autre mode, la largeur de la zone périphérique 61 et la largeur de la zone périphérique 62 sont différentes.

A titre préférentiel, l'enlèvement par fusion et vaporisation intervient simultanément sur les faces principales 111, 121 et 112, 122.

Selon un mode particulier, les zones périphériques 61, 62 de chacune des première 11 et seconde tôles d'acier 12, sont dépourvues de leur couche respective d'alliage métallique 19, 20 en laissant en place leur couche respective d'alliage intermétallique 17, 18.

Selon un mode de l'invention, les substrats 25, 26 ont des compositions d'acier différentes.

Selon un mode particulier, les pré-revêtements 15,16 ont des épaisseurs différentes

Avantageusement, la couche d'alliage métallique 19,20 du pré-revêtement 15,16 comprend, les teneurs étant exprimées en poids, entre 8 et 11% de silicium, entre 2 et 4 % en fer, le reste de la composition étant de l'aluminium et des impuretés inévitables.

Le jeu 31 entre les faces secondaires 71 et 72 est avantageusement supérieur à 0,04 mm, et très avantageusement supérieur à 0,06 mm.

L'invention a également pour objet un procédé de fabrication d'un flan soudé, caractérisé en ce qu'on approvisionne au moins une première 11 et une seconde 12 tôles préparées par un procédé selon l'une quelconque des revendications 1 à 10, et en ce qu'une opération de soudage des première tôle 11 et seconde tôle 12 intervient dans la zone de l'enlèvement par fusion et vaporisation, suivant un plan défini par ledit plan médian 51, moins d'une minute après l'opération d'enlèvement par fusion et vaporisation sur les première tôle 11 et seconde tôle 12.

Préférentiellement, l'opération de soudage est réalisée par au moins un faisceau Laser 95.

A titre préférentiel, l'opération de soudage est réalisée simultanément par deux faisceaux Laser, l'un effectuant un soudage du côté des faces principales 111 et 121, l'autre effectuant un soudage du côté des faces principales opposées 112 et 122.

L'enlèvement par fusion et vaporisation est avantageusement réalisé grâce à un faisceau Laser 80, et les dispositifs permettant de réaliser l'enlèvement et l'opération de soudage sont combinés au sein d'un équipement dont la vitesse relative de déplacement par rapport à la première tôle 11 et la seconde tôle 12, est identique

A titre préférentiel, l'opération de soudage est réalisée en utilisant simultanément au moins un faisceau Laser 95 et un fil d'apport 82.

Selon un mode particulier, l'étape d'enlèvement est guidée à l'aide d'un dispositif de suivi du plan médian 51 les coordonnées (x-y) définissant la localisation du plan 51 à un instant t, sont enregistrées par un moyen informatique, et sont utilisées pour guider l'opération de soudage intervenant ultérieurement.

Selon un mode de l'invention, l'étape d'enlèvement est guidée à l'aide d'un premier dispositif de suivi du plan médian 51, et le guidage du soudage est réalisé au moyen d'un second dispositif de suivi du plan médian, distinct du premier dispositif.

Selon un autre mode de l'invention, les tôles 11 et 12 sont bridées par un dispositif de bridage 98 durant l'opération d'enlèvement par fusion et vaporisation, le bridage étant maintenu constamment jusqu'à l'opération de soudage et au moins pendant l'opération de soudage, par le dispositif 98.

L'invention a également pour objet un procédé de fabrication d'une pièce durcie sous presse à partir d'un flan soudé, comprenant les étapes successives selon lesquelles :

- on approvisionne au moins un flan soudé fabriqué selon l'une quelconque des modalités ci-dessus, puis

- on chauffe le flan soudé de manière à former, par alliation entre le substrat d'acier 25, 26 et le pré-revêtement 15, 16 un composé allié intermétallique, et de manière à conférer une structure partiellement ou totalement austénitique au substrat 25, 26, puis

- on met en forme à chaud le flan soudé pour obtenir une pièce, puis

- on refroidit la pièce avec une vitesse suffisante pour former au moins partiellement de la martensite ou de la bainite dans le substrat 25, 26, obtenant ainsi un durcissement sous presse

A titre préférentiel, la mise en forme à chaud du flan soudé est réalisée par une opération d'emboutissage à chaud.

L'invention a également pour objet un flan soudé réalisé par l'assemblage d'au moins une première 11 et une seconde 12 tôle d'acier pré-revêtues, constituées d'un substrat en acier 25,26, et d'un pré-revêtement 15,16 constitué d'une couche d'alliage intermétallique 17,18 en contact avec le substrat en acier, surmontée d'une couche métallique d'aluminium, ou d'alliage d'aluminium ou à base d'aluminium 19,20, la première tôle 11 comprenant une face principale 111, une face principale opposée 112, la seconde tôle 12 comprenant une face principale 121 et une face principale opposée 122, la couche d'alliage métallique 19 étant ôtée par fusion et vaporisation dans une zone périphérique 61 de la tôle 11, et la couche d'alliage métallique 20 dans une zone périphérique 62 de la tôle 12, le flan soudé comportant au moins un joint soudé 52 définissant un plan médian 51 perpendiculaire aux faces principales de la première 11 et seconde tôle 12, et des sections transversales 52 a, 52b,... 52n perpendiculaires au plan médian 51, caractérisée en que les caractéristiques morphologiques des couches 17 et 18 résultant de la solidification après les fusion et vaporisation du pré-revêtement, dans les zones périphériques 61 et 62, sont identiques dans les sections 52 a, 52b,... 52n de part et d'autre du plan médian 51.

La somme de la largeur des zones périphériques 61 et 62 varie préférentiellement de moins de 10% le long du joint soudé.

A titre préférentiel, la couche d'alliage métallique 19,20 du pré-revêtement 15,16 comprend, les teneurs étant exprimées en poids, entre 8 et 11% de silicium, entre 2 et 4 % en fer, le reste de la composition étant de l'aluminium et des impuretés inévitables.

L'invention a également pour objet un flan soudé réalisé par l'assemblage d'au moins une première (11) et une seconde (12) tôle d'acier pré-revêtues, constituées d'un substrat en acier (25,26), et d'un pré-revêtement (15,16) constitué d'une couche d'alliage intermétallique (17,18) en contact avec ledit substrat en acier, surmontée d'une couche métallique d'aluminium, ou d'alliage d'aluminium ou à base d'aluminium (19,20), ladite au moins une première tôle (11) comprenant une face principale (111), une face principale opposée (112), ladite au moins une seconde tôle (12) comprenant une face principale (121) et une face principale opposée (122), ladite couche d'alliage métallique (19) étant ôtée par fusion et vaporisation dans une zone périphérique (61) de ladite au moins une tôle (11), et ladite couche d'alliage métallique (20) dans une zone périphérique (62) de ladite au moins une tôle (12), ledit flan soudé comportant au moins un joint soudé (52) définissant un plan médian (51) perpendiculaire aux faces principales desdites au moins une première (11) et seconde tôle (12), et des sections transversales (52 a), (52b),... (52n) perpendiculaires audit plan médian (51), caractérisée en ce que les caractéristiques morphologiques desdites couches (17 et 18) résultant de la solidification après lesdites fusion et vaporisation dudit pré-revêtement, dans lesdites zones périphériques (61) et (62), sont identiques dans lesdites sections (52 a), (52b),... (52n) de part et d'autre dudit plan médian (51).

De préférence, la somme de la largeur desdites zones périphériques (61) et (62) varie de moins de 10% le long dudit joint soudé.

A titre préférentiel, la couche d'alliage métallique (19,20) dudit pré-revêtement (15,16) comprend, les teneurs étant exprimées en poids, entre 8 et 11% de silicium, entre 2 et 4 % en fer, le reste de la composition étant de l'aluminium et des impuretés inévitables.

L'invention a également pour objet un dispositif de fabrication de flans soudés comprenant :

- un dispositif d'approvisionnement 91 d'au moins une première 11 et une seconde 12 tôles d'acier pré-revêtues d'aluminium, ou d'alliage d'aluminium, ou d'alliage à base d'aluminium,
- un dispositif d'accostage 92 des tôles, de façon à obtenir un plan médian 51 entre les tôles 11 et 12,
- un dispositif de bridage 98 des tôles,
- au moins une source permettant d'obtenir un faisceau Laser 80 pour ôter par fusion et vaporisation la couche métallique d'aluminium, ou d'alliage à d'aluminium ou à base d'aluminium, simultanément sur une zone périphérique 61, 62 des première 11 et seconde 12 tôles,
- au moins un dispositif de guidage 94 permettant de positionner le faisceau Laser 80 par rapport au plan médian 51,
- au moins une source permettant d'obtenir un faisceau Laser 95 pour le soudage des tôles 11 et 12, dans la zone d'enlèvement de la couche métallique d'aluminium 61, 62, de façon à obtenir un joint soudé,
- au moins un dispositif permettant d'obtenir un déplacement relatif des tôles 11 et 12 par rapport aux faisceaux Laser 80 et 95,
- les faisceaux Laser 80 et 95 étant disposés sur une même ligne par rapport au plan médian 51, et à une distance 64 fixe l'un de l'autre.

A titre préférentiel, la distance 64 entre les faisceaux Laser 80 et 95 est comprise entre 0,5 mm et 2m. Avantageusement, la distance 64 est inférieure à 600 mm. Selon un mode particulier, la distance 64 est inférieure à 5mm.

Selon un mode avantageux, le faisceau Laser 80 débouche à partir d'une tête d'ablation, le faisceau 95 débouche à partir d'une tête de soudage, les têtes formant un élément compact dont le dispositif de focalisation est commun pour les faisceaux Laser 80 et 95.

Avantageusement, le dispositif de guidage 94 permet également de positionner le faisceau Laser 95 par rapport au plan médian 51.

Selon un mode particulier, le dispositif comprend en outre un dispositif de fil d'apport 82 pour la réalisation dudit joint soudé.

A titre avantageux, le dispositif comporte en outre un faisceau Laser permettant d'effectuer un soudage sur la face opposée à celle où opère le faisceau 95. L'invention a également pour objet l'utilisation d'une pièce durcie sous presse selon les caractéristiques ci-dessus, pour la fabrication de pièces de structures, anti-intrusion ou d'absorption de chocs, dans des véhicules notamment automobiles.

D'autres caractéristiques et avantages de l'invention apparaîtront au cours de la description ci-dessous donnée à titre d'exemple et faite en référence aux figures jointes suivantes :

- la figure 1 présente une coupe micrographique d'une tôle pré-revêtue d'aluminium, destinée à être soudée, dont la périphérie a été préparée selon un procédé de l'art antérieur.
- la figure 2 présente un descriptif schématique de deux tôles placées en regard, après qu'un traitement selon l'invention d'enlèvement simultané périphérique de couche métallique, a eu lieu.
- la figure 3 illustre l'influence du jeu d'accostage entre deux tôles placées en regard, dont la couche métallique du pré-revêtement a été ôtée par ablation simultanée périphérique, sur l'écoulement du pré-revêtement le long des faces secondaires de ces tôles.
- la figure 4 illustre schématiquement un mode de réalisation préférentiel de l'invention.
- la figure 5 illustre un schéma d'un dispositif préférentiel selon l'invention.
- la figure 6a illustre une vue en élévation d'un joint soudé Laser réalisé selon l'invention. Les micrographies 6c) et 6c) détaillent la surface de deux zones où l'ablation a eu lieu, situées symétriquement de part et d'autre du joint soudé.
- la figure 7a illustre schématiquement les étapes du procédé conventionnel de fabrication de flans soudés prérevêtus d'un revêtement métallique. Par comparaison, la figure 7b illustre le procédé de fabrication de flans soudés prérevêtus d'un revêtement métallique, selon l'invention.

On notera que les schémas ne visent pas à reproduire les dimensions relatives des différents éléments entre eux, mais à faciliter la description des différentes parties constitutives de l'invention.

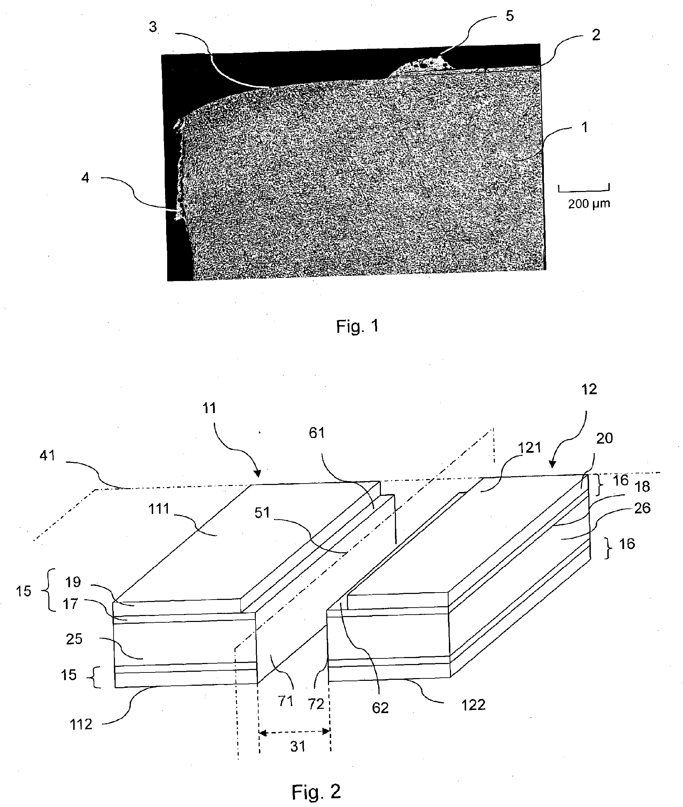

Dans les procédés de l'art antérieur où l'enlèvement de la couche d'alliage métallique résulte d'une fusion, on constate la présence plus ou moins importante d'aluminium ayant coulé sur la face secondaire. Cette situation est illustrée à la figure 1 qui présente une coupe macrographique d'une tôle d'acier de 1 mm d'épaisseur pré-revêtue d'un alliage d'aluminium, sur laquelle on a enlevé par fusion et vaporisation au moyen d'un faisceau Laser, la couche d'alliage métallique superficielle. La figure 1 présente ainsi un substrat d'acier 1 comportant un pré-revêtement d'aluminium 2 de 25 micromètres d'épaisseur. Seule une des deux faces principales de la tôle est illustrée sur la macrographie. Sur la périphérie d'une face principale de la tôle, on a ôté au moyen d'un faisceau Laser pulsé, la couche métallique d'aluminium en laissant en place la couche intermétallique, créant ainsi une zone d'ablation 3. En raison de la pression de vapeur ou de plasma généré par le faisceau Laser, l'aluminium liquide est rejeté sur la périphérie de la zone 3, créant ainsi une zone 5 d'accumulation d'aluminium. De plus, cette opération d'ablation a créé un écoulement 4 d'une partie de la couche d'aluminium sur la face secondaire, écoulement dont la longueur peut atteindre 0,4 mm environ. En effet, contrairement à ce qui intervient dans le cas de l'impact d'un faisceau Laser sur un revêtement organique qui est totalement vaporisé, l'impact du faisceau Laser sur un revêtement métallique ne conduit pas à sa disparition totale par vaporisation, mais à une vaporisation partielle et une fusion.

Les inventeurs ont mis en évidence que ce phénomène d'écoulement le long de la face secondaire pouvait être évité par le procédé suivant : selon la figure 2, on approvisionne au moins deux tôles 11 et 12 d'acier pré-revêtues, qui peuvent être de même épaisseur ou d'épaisseurs différentes, la figure 2 illustrant la première alternative. A ce stade, les tôles 11 et 12 ne sont pas nécessairement rectangulaires, la géométrie de leur contour est en rapport avec celui des pièces finales que l'on souhaite fabriquer, qui sera obtenue par une mise en forme ultérieure. Le terme de tôle est entendu ici dans un sens large comme tout objet obtenu par découpe à partir d'une bande, d'une bobine ou d'une feuille.

Ces tôles sont constituées d'un substrat en acier 25 et 26, qui peut être notamment sous forme de tôle laminée à chaud ou laminée à froid en fonction de l'épaisseur désirée. La composition de ces substrats peut être identique ou différente, selon la répartition souhaitée des caractéristiques mécaniques sur la pièce finale. Ces aciers sont des aciers de traitement thermique, aptes à subir une trempe martensitique ou bainitique après un traitement d'austénitisation. L'épaisseur des tôles est comprise préférentiellement entre 0,5 et 4 mm environ, gamme d'épaisseur utilisée notamment dans la fabrication de pièces structurales ou de renfort pour l'industrie automobile.

Les tôles 11 et 12 comprennent respectivement des faces principales 111, 112, et 121, 122. A la surface de chacune de ces faces, on trouve un pré-revêtement 15 et 16, dont l'épaisseur et la composition peuvent être identiques ou différentes dans les tôles 1 et 2. Ces pré-revêtements 15 et 16 sont tous deux obtenus au trempé dans un bain d'aluminiage.

Le pré-revêtement 15, est lui-même composé :

- d'une couche d'alliage intermétallique 17 situé au contact du substrat 25. Il s'agit d'une couche d'alliage du type $Fe_xAl_y$ formée par réaction entre le substrat 25 et le métal fondu du bain d'aluminiage, lors du passage des tôles en continu dans le bain d'aluminiage. Cette couche a une épaisseur typique de 3 à 10 micromètres. Le bain d'aluminiage est un bain d'aluminium, ou un alliage d'aluminium, l'aluminium étant alors en teneur pondérale supérieure à 50%, ou un alliage à base d'aluminium. Dans ce dernier cas, l'aluminium est le constituant majoritaire de l'alliage.

- d'une couche d'alliage métallique 19, dont la composition est pratiquement celle du bain d'aluminium, ou d'alliage d'aluminium ou d'alliage à base d'aluminium.

De même, dans la tôle 12, le pré-revêtement 16 est constitué d'une couche d'alliage intermétallique au contact du substrat 26 et d'une couche métallique superficielle.

Préférentiellement, l'alliage métallique 19, 20 du pré-revêtement peut contenir de 8 à 11% en poids de silicium, de 2 à 4% de fer, le reste de la composition étant de l'aluminium et des impuretés inévitables. L'addition de silicium permet notamment de réduire l'épaisseur de la couche intermétallique 17.

Les deux tôles 11 et 12 peuvent être disposées de façon à ce que leurs faces principales 111 et 112 soient comprises au sein d'un même plan 41. De la sorte, un faisceau Laser mis simultanément en œuvre sur ces deux tôles viendra interagir de façon identique. Mais on peut également prévoir que les deux tôles 11 et 12 ne se situent pas exactement sur le même plan, c'est à dire que le point de focalisation d'un faisceau Laser n'est pas situé exactement au même niveau par rapport à la surface de deux tôles avec un pré-revêtement identique. Cette situation peut se rencontrer par exemple dans le cas de différence d'épaisseur entre les deux tôles 11 et 12. Même dans ce cas, les inventeurs ont vérifié que les résultats recherchés, en particulier l'absence d'écoulement de pré-revêtement le long des faces secondaires, sont obtenus lorsque le procédé est mis à l'œuvre selon l'invention.

On accoste les deux tôles 11 et 12 de façon à mettre en regard deux de leurs faces secondaires 71 et 72. Cet accostage définit ainsi un plan médian 51 entre les tôles 11 et 12, perpendiculaire à leurs faces principales, et un jeu 31 entre ces tôles.

Selon l'invention, on enlève ensuite simultanément, par un procédé comportant une fusion et une vaporisation, dans une portion périphérique 61 de la tôle 11, et une portion périphérique 62 de la tôle 12, les couches respectives d'alliage métallique 19 et 29 de ces tôles. En règle générale, la plus grande partie de cet enlèvement est dû à un phénomène de fusion, on exclut ici des procédés où l'enlèvement des couches 19 et 20 interviendrait par vaporisation pure. Cet enlèvement, appelé aussi ablation, est réalisé préférentiellement par faisceau Laser pulsé. L'impact du faisceau à haute densité d'énergie et de puissance sur le pré-revêtement provoque une liquéfaction et une vaporisation de la surface de ce dernier. En raison de la pression de plasma, le pré-revêtement liquéfié est expulsé vers la périphérie de la zone où intervient l'ablation. Une succession d'impulsions Laser brèves avec des paramètres adaptés conduit à une ablation de la couche métallique 19 et 20, laissant en place la couche d'alliage intermétallique 17 et 18. Cependant, selon le degré de résistance à la corrosion souhaité sur la pièce finale, il est également possible d'ôter une portion plus ou moins importante de la couche intermétallique 17 et 18, par exemple plus de 50% de cette couche. L'interaction d'un faisceau Laser pulsé dirigé vers la périphérie 61 et 62 de tôles pré-revêtues, en translation relative par rapport à ces tôles, conduit donc à un enlèvement de la couche métallique 19 et 20.

L'ablation est réalisée d'une manière simultanée sur les tôles 11 et 12, c'est-à-dire que le moyen de fusion et de vaporisation est appliqué simultanément sur les zones périphériques 61 et 62 en regard l'une de l'autre. En particulier, lorsque l'ablation est réalisée par un faisceau Laser, celui-ci vient impacter les zones 61 et 62 en chevauchant le plan médian 51. Selon un mode de réalisation préféré, on utilise un faisceau Laser pulsé de forme rectangulaire. On peut également mettre en œuvre un faisceau Laser de plus petite dimension que l'on fait osciller pour couvrir la largeur à traiter. On peut également mettre en œuvre le procédé en utilisant un faisceau principal divisé en deux sous faisceaux rectangulaires chevauchant chacun le plan médian 51. Ces deux sous-faisceaux peuvent être disposés symétriquement par rapport au plan 51, ou être décalés longitudinalement l'un par rapport à l'autre dans le sens du soudage. Ces deux sous-faisceaux peuvent être de taille identique ou différente.

Dans ces différents modes d'ablation simultanée, il était alors attendu que l'aluminium résultant de la fusion due à l'impact du faisceau, vînt couler sur les faces secondaires 71 et 72 en raison de la gravité et de la pression de plasma générée par le faisceau.

D'une manière surprenante, les inventeurs ont mis en évidence que les faces secondaires 71 et 72 ne comportent pas d'écoulement d'aluminium lorsque le jeu 31 est compris entre 0,02 et 2 mm. Sans vouloir être lié par une théorie, on pense que les faces secondaires 71 et 72 sont couvertes d'une très mince couche d'oxyde de fer et/ou d'aluminium provenant de la découpe des tôles 11 et 12. Compte tenu de la tension interfaciale entre cette fine couche d'oxydes et l'aluminium liquide d'une part, et du jeu spécifique 31 d'autre part, la surface libre de l'aluminium liquide entre les tôles 11 et 12 s'incurve pour former un angle de mouillage, sans que le liquide ne coule dans l'intervalle 31. Un jeu minimal de 0,02 mm permet au faisceau de passer entre les tôles 11 et 12, ôtant d'éventuelles traces d'aluminium qui auraient pu se trouver sur la face secondaire. De plus, comme on le verra plus loin, selon une variante du procédé, on vient souder immédiatement après avoir réalisé cette opération d'ablation : lorsque la distance 31 est inférieure à 0,02 mm, il existe une possibilité que les deux parties en regard des tôles 11 et 12, en raison de leur dilatation thermique due aux opérations d'ablation et de soudage, ne viennent en contact l'une de l'autre, conduisant à une déformation plastique néfaste.

Le jeu 31 est avantageusement supérieur à 0,04 mm, ce qui permet de mettre en œuvre des procédés de découpe mécanique dont la tolérance n'a pas à être contrôlée de façon extrêmement stricte, et permet de réduire les coûts de production.

De plus, comme on l'a indiqué ci-dessus, le guidage du faisceau Laser de soudage est plus difficile dans le cas de tôles dont le revêtement a été ôté à la périphérie, en raison de leur aspect plus sombre. Les inventeurs ont mis en évidence qu'une largeur de jeu 31 supérieure à 0,06 mm permettait de renforcer notablement le contraste optique du plan de joint qui apparaissait de façon différenciée par rapport aux zones d'ablation périphériques, et ainsi de s'assurer que le soudage était bien positionné sur le plan médian 51.

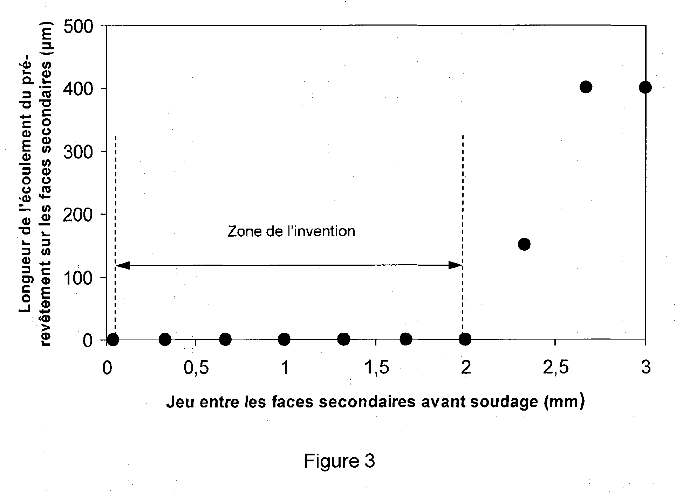

Par ailleurs, les inventeurs ont constaté que lorsque le jeu 31 était supérieur à 2 mm, le mécanisme exposé ci-dessus n'était plus opérant pour empêcher l'écoulement de l'aluminium liquide, comme le démontre les résultats expérimentaux de la figure 3.

Avantageusement, un jeu compris entre 0,02 et 0,2mm pourra être retenu.

Pour le procédé d'ablation, on pourra utiliser avantageusement un Laser de type Q-switch d'une puissance nominale de quelques centaines de watts, délivrant des impulsions d'une durée de l'ordre d'une cinquantaine de nanosecondes avec une puissance maximale de 1-20 mégawatts. Ce type de Laser permet par exemple d'obtenir une zone d'impact du faisceau rectangulaire de 2mm (dans le sens d'une direction perpendiculaire au plan médian 51) et de 1mm, ou moins de 1mm, (par exemple 0,5mm) dans le sens de la longueur de ce plan médian. Le déplacement du faisceau permet alors de créer des zones d'ablation 61 et 62 de part et d'autre du plan 51, sans qu'un écoulement n'intervienne le long des faces 71 et 72.

La morphologie des zones d'ablation 61 et 62 sera naturellement adaptée aux conditions de soudage qui suivront, en particulier à la largeur de la zone soudée : on peut ainsi prévoir, selon la nature et la puissance du procédé de soudage qui suivra, que la largeur de chacune des zones d'ablation 61 et 62 soit comprise entre 0,25 et 2,5mm, ou par exemple dans le cas de soudage hybride Laser-arc ou plasma, entre 0,25 et 3mm. On choisira des conditions d'ablation de telle sorte que la somme des largeurs des zones d'ablation 61 et 62 soit supérieure à la largeur de la zone soudée.

On peut prévoir, dans le cas où les tôles 11 et 12 sont identiques, que les largeurs des zones d'ablation 61 et 62 soient également identiques. Mais on peut aussi prévoir, grâce par exemple au décentrement dans le sens latéral, d'un faisceau Laser par rapport au plan médian 51, que les largeurs de ces zones d'ablation soient différentes.

Selon l'invention, l'ablation peut être réalisée sur un seul côté des faces principales. La figure 2 illustre ainsi ce cas où l'ablation périphérique simultanée a été effectuée uniquement du côté des faces principales 111 et 121.

Cependant, dans le but de limiter le plus possible l'introduction d'aluminium lors du soudage qui sera effectué sur ces tôles, on peut également réaliser de manière préférentielle cette ablation périphérique simultanée sur l'ensemble des faces, c'est-à-dire 111, 121, 112, 122. A cet effet, dans le cas d'une ablation par soudage Laser, on utilisera avantageusement un dispositif du type «power switch», qui divise la puissance du faisceau, une partie étant utilisée pour l'ablation simultanée des faces 111 et 121, l'autre partie étant utilisée pour l'ablation simultanée des faces 112 et 122. Il est également possible d'utiliser un second Laser, distinct du premier.

Après cette opération d'ablation simultanée, on dispose de deux tôles dont la périphérie a été dépourvue de leur couche d'alliage métallique, aptes au soudage. Ce soudage peut intervenir ultérieurement, les tôles pouvant être soit conservées en regard l'une de l'autre, soit séparées. Cette séparation intervient aisément, le procédé selon l'invention ayant permis de limiter l'écoulement de l'aluminium liquide entre les tôles, si bien qu'un écoulement solidifié ne créée pas de liaison mécanique indésirable.

Mais les inventeurs ont également découvert qu'une opération de soudage en ligne pouvait être réalisée avec profit sur les tôles ainsi préparées. En effet, compte tenu de l'absence d'écoulement d'aluminium sur la face secondaire, les tôles préparées peuvent être soudées immédiatement sans qu'il soit nécessaire d'ôter les tôles de la ligne puis de les repositionner après nettoyage. L'intervalle de temps s'écoulant entre l'opération d'ablation simultanée et l'opération de soudage est inférieur à une minute, de façon à minimiser une oxydation sur les faces 71 et 72 et à obtenir une productivité plus importante. En outre, lorsque cet intervalle de temps est faible, le soudage intervient sur des tôles préchauffées par l'opération d'ablation, si bien que la quantité d'énergie à mettre en œuvre pour le soudage est moins importante.

On pourra utiliser tout procédé de soudage continu approprié aux épaisseurs et aux conditions de productivité et de qualité requises pour les joints soudés, et notamment :

- le soudage par faisceau Laser
- le soudage à l'arc électrique, en particulier par les procédés TIG (« Tungsten Inert Gas), plasma, MIG (« Métal Inert Gas) ou MAG (« Metal Active Gas »)
- le soudage par faisceau d'électrons.

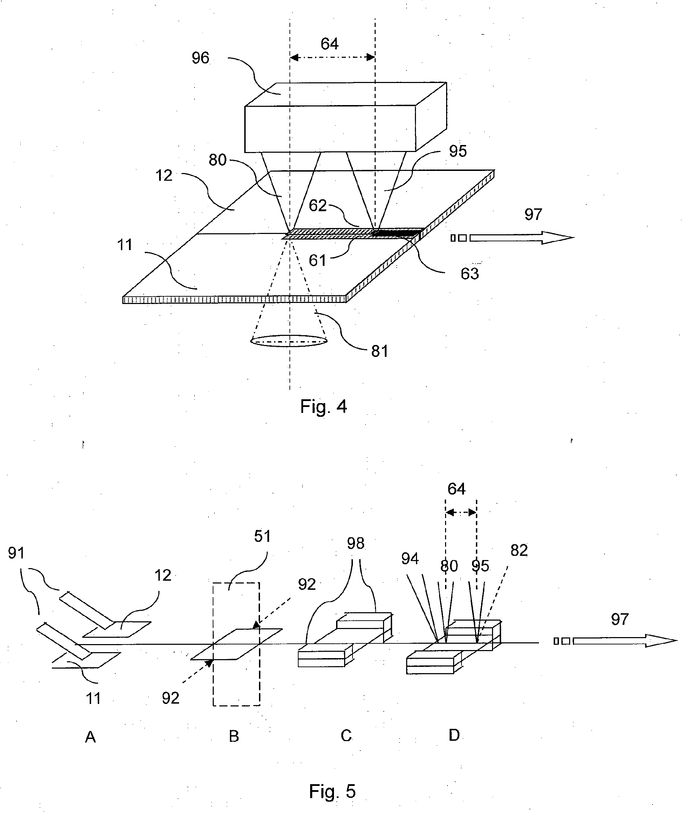

Un procédé utilisé préférentiellement est le soudage Laser en raison de la forte densité d'énergie inhérente à ce procédé, qui permet d'obtenir une largeur de zone fondue étroite variant dans de faibles proportions. Ce procédé peut être utilisé seul ou en combinaison avec un fil d'apport 82, comme le montre la figure 5. Dans ce cas, il est possible de modifier la composition de la zone fondue grâce à une composition du fil d'apport différente de celles des compositions des tôles 25 et 26. Le procédé de soudage associant un faisceau Laser et un fil d'apport peut consister alors soit en un procédé où le fil d'apport est fondu uniquement par le faisceau Laser, soit en un soudage hybride laser-TIG, c'est-à-dire un faisceau Laser combiné à un arc électrique délivré par une torche de soudage TIG équipée d'une électrode non fusible, soit en un soudage hybride Laser-MIG dans lequel la torche de soudage est équipée d'une électrode filaire fusible.

Selon une variante de l'invention, les dispositifs réalisant les opérations d'ablation simultanée et de soudage, sont combinés au sein d'un seul équipement. Ce dernier est animé d'une vitesse unique de déplacement relatif par rapport aux tôles. Dans cet équipement, la vitesse d'ablation simultanée est identique à la vitesse de soudage, ce qui permet d'effectuer une fabrication dans des conditions optimales de productivité et de rationalisation.

La figure 4 illustre une variante préférentielle de l'invention : on a représenté les tôles 11 et 12 comprenant un pré-revêtement d'aluminium, d'alliage d'aluminium ou à base d'aluminium. Un premier faisceau Laser 80 effectue une ablation simultanée d'une zone périphérique 61 de la tôle 11, et d'une zone périphérique 62 de la tôle 12, le faisceau Laser chevauchant le plan médian des tôles 11 et 12. Un second faisceau Laser 81 effectue simultanément une opération identique sur la face inférieure de la tôle. Selon une variante (non représentée à la figure 4) seul un faisceau Laser 80 effectue l'ablation, celle-ci n'étant pas réalisée sur la face opposée. Cette variante sera mise en œuvre lorsqu'il n'est pas nécessaire de rechercher une très basse teneur en aluminium dans la zone soudée qui sera réalisée ultérieurement.

A une certaine distance 64 de cette première zone d'ablation, un faisceau Laser 95 effectue le soudage des tôles 11 et 12, de façon à créer une zone soudée 63. La distance entre les dispositifs d'ablation et de soudage est maintenue constante selon un dispositif connu en lui-même représenté schématiquement par 96. Les tôles 11 et 12 se déplacent par rapport à cet ensemble 96 selon le mouvement indiqué par 97.

Les tôles 11 et 12 sont avantageusement bridées par un dispositif de bridage, non représenté sur la figure 4. Les tôles sont bridées pendant l'opération d'ablation des faisceaux 80 et 81, ce bridage est maintenu jusqu'au soudage inclus, celui-ci étant réalisé grâce au faisceau 95. De la sorte, aucun déplacement relatif entre les tôles 11 et 12 ne se produit, et le soudage grâce au faisceau Laser 95 peut intervenir avec une plus grande précision.

La distance maximale entre les points d'impact des faisceaux 80, 81 d'une part, et 95 d'autre part, dépend en particulier de la vitesse de soudage : comme on l'a vu ci-dessus, elle sera déterminée en particulier de façon à ce que la durée s'écoulant entre les impacts des faisceaux (80, 81) et 95, soit inférieur à une minute. Cette distance maximale pourra être préférentiellement inférieure à 2 m pour que l'équipement soit particulièrement compact.

La distance minimale 64 entre ces points d'impact peut être réduite jusqu'à 0,5 mm. Une distance plus faible que 0,5mm conduirait à une interaction indésirable entre les faisceaux d'ablation 80, 81 d'une part, et le « keyhole » présent de façon inhérente lors du soudage par le faisceau 95 d'autre part.

Une faible distance 64 peut aussi être obtenue en combinant les deux têtes d'ablation et de soudage (les têtes étant définies comme les dispositifs à partir desquels débouchent les faisceaux Laser) au sein d'une seule tête plus compacte, cette dernière pouvant utiliser par exemple le même élément de focalisation pour l'opération d'ablation et de soudage.

Une très faible distance 64 permet de mettre en œuvre le procédé grâce à un équipement particulièrement compact et de faire en sorte qu'une certaine quantité de l'énergie thermique délivrée par les faisceaux Laser 80 et 81 vienne s'ajouter à l'énergie linéaire de soudage délivrée par le faisceau 95, accroissant ainsi le rendement énergétique global du procédé. Une très faible distance permet de raccourcir le temps de cycle nécessaire à la production unitaire d'un flan soudé, et ainsi d'augmenter la productivité. Ces effets sont obtenus en particulier lorsque la distance 64 est inférieure à 600mm, ou même inférieure à 5mm.

La figure 5 illustre un schéma d'un dispositif préférentiel selon l'invention. Celui-ci comprend les éléments suivants :

- un poste A comprend un dispositif d'approvisionnement 91 connu en lui-même, permettant d'approvisionner au moins une première 11 et une seconde 12 tôles d'acier pré-revêtues d'aluminium, ou d'alliage d'aluminium, ou d'alliage à base d'aluminium.
- un poste B comprend un dispositif d'accostage 92 de ces tôles 11 et 12, également connu en lui-même. Après l'accostage des tôles, un plan médian 51 virtuel est ainsi défini.
- un poste C comprend un dispositif de bridage 98 de ces tôles 11 et 12 connu en lui-même, qui peut être par exemple un dispositif de bridage magnétique, mécanique ou hydraulique.
- un poste D comprend au moins un dispositif de guidage 94 connu en lui-même qui permet de détecter le plan médian 51 et de positionner le faisceau Laser 80 par rapport à ce plan médian. Ce dispositif peut par exemple comporter un éclairage de la zone du plan médian par un faisceau lumineux, et un capteur photosensible CCD ou CMOS du faisceau réfléchi, qui permet de localiser la position (x, y) du plan médian à un instant donné. Ceci permet de commander le positionnement du faisceau Laser 80 d'ablation qui se trouve en aval dans le sens de la direction relative de soudage, de telle sorte que sa position coïncide avec la localisation souhaitée de la zone d'ablation.
- au moins une source permettant d'obtenir un faisceau Laser 80 pour ôter par fusion et vaporisation la couche métallique d'aluminium, simultanément sur la zone périphérique de part et d'autre du plan médian 51. Comme on l'a mentionné précédemment, un second faisceau Laser 81 (non représenté sur la figure 5) peut également effectuer la même opération sur les faces opposées.
- au moins une source permettant d'obtenir un faisceau Laser 95 pour le soudage des tôles 11 et 12, dans la zone d'enlèvement de la couche métallique d'aluminium 61, 62, de façon à obtenir un joint soudé. La source Laser utilisée peut être choisie parmi une source Laser de type Laser gaz $CO_2$ de longueur d'onde de 10 micromètres ou une source Laser état solide de longueur d'onde de 1 micromètre. Compte tenu de l'épaisseur des tôles, typiquement inférieure à 3 millimètres, la puissance du Laser gaz $CO_2$ sera supérieure ou égale à 3, voire à 7 kilowatts ; dans le cas d'un Laser état solide, la puissance sera supérieure ou égale à 2, voire à 4 kilowatts.

A titre optionnel, un second faisceau Laser, d'un type semblable à 95, peut être appliqué en partie inférieure, c'est-à-dire sur la face opposée. Cette disposition permet d'augmenter la vitesse de soudage et/ou de diminuer la puissance unitaire de la source 95.

Ce faisceau 95 peut être soit guidé par un dispositif de guidage propre, distinct de 94 (cas non représenté sur la figure 5) soit être guidé par le dispositif 94. Les inventeurs ont découvert que cette dernière solution était particulièrement avantageuse puisqu'elle permet de faire en sorte que le soudage soit exactement localisé dans la zone où est intervenue l'ablation, c'est-à-dire que les deux étapes d'ablation et de soudage soient parfaitement coordonnées. - à titre optionnel, l'ensemble peut comporter un dispositif de fil d'apport 82, de façon à modifier la composition de la zone fondue grâce à une composition du fil d'apport différente de celles des compositions des tôles 25 et 26.

Les tôles 11 et 12 sont déplacées depuis le poste A vers le poste D, de façon à obtenir un déplacement relatif des tôles par rapport aux faisceaux Laser 80 et 95, ceux-ci étant disposés sur une même ligne par rapport au plan médian 51, et à une distance 64 fixe l'un de l'autre.

Comme on l'a vu précédemment, cette distance 64 est comprise de préférence entre 0,5mm et 2 m, préférentiellement entre 0,5mm et 600mm, ou entre 0,5mm et 5mm.

Le flan soudé obtenu par le procédé selon l'invention présente des caractéristiques spécifiques :

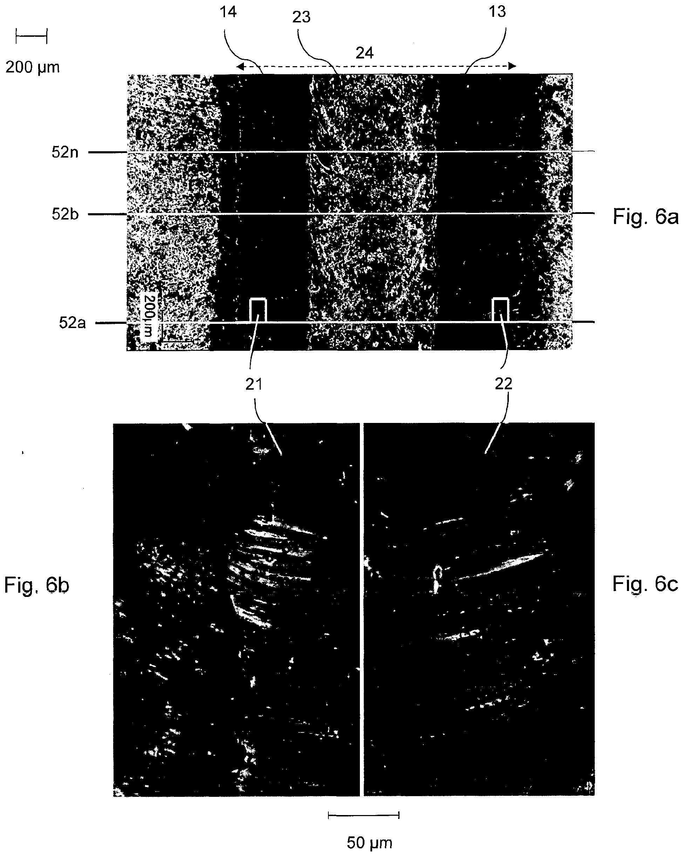

- selon la figure 5, le soudage des flans intervenant en ligne selon le plan médian 51, est réalisé sur des flans 11 et 12 qui ont subi une ablation simultanée grâce au faisceau 95. L'ablation conduit à une fusion et une vaporisation du revêtement, sa solidification ultérieure se produit en formant des rides spécifiques dont l'espacement dépend de la durée d'impulsion et de la vitesse d'avance du faisceau d'ablation. Dans le procédé illustré à la figure 5, cette morphologie de solidification est identique de part et d'autre du plan 51, puisque l'ablation est réalisée grâce à un faisceau chevauchant ce plan de joint. Ainsi, la figure 6 présente une vue macrographique en élévation d'un joint soudé réalisé selon le procédé de la figure 5. Les zones 13 et 14, ayant subi une ablation simultanée, sont situées de part et d'autre de la soudure 23. Si l'on considère des zones 21 et 22 situées en regard l'une de l'autre le long d'une section transversale 52a, on constate que la morphologie de solidification est identique. Il en est de même pour les autres sections, 52b... 52n. Ainsi, lorsque le faisceau Laser 95 de soudage impacte les deux tôles à assembler, cet impact intervient sur des zones dont la réflectivité est identique de part et d'autre du plan 51, si bien que l'on obtient une profondeur de pénétration absolument identique de part et d'autre de ce plan. L'invention permet donc d'obtenir une géométrie du joint soudé final très régulière et une dilution bien homogène de l'aluminium dans la soudure, quelle soit la section transversale 52a, 52b... 52n considérée.

- d'autre part, dans la technique de l'art antérieur, on a vu que l'ablation était réalisée sur une seule tôle à la fois, en utilisant un faisceau Laser en déplacement longitudinal qui prend comme point de référence le bord de la tôle. Cependant, malgré les précautions apportées à l'opération de découpe des tôles, la rectitude d'un bord préparé comporte inévitablement un écart par rapport à une ligne droite idéale, l'écart pouvant être quantifié par un écart-type $\sigma_1$. Par ailleurs, le déplacement longitudinal du faisceau Laser est lui-même sujet à une variation de sa position dans le sens transversal, quantifiée par un écart-type $\sigma_2$. Par cette méthode, on produit donc une tôle dont la largeur de la zone avec ablation comporte une variation d'écart type $(\sigma_1 + \sigma_2)$ dans le sens longitudinal de l'opération d'ablation. Après cette opération, ces deux tôles sont mises en regard puis soudées. On réalise ainsi un flan soudé dont la largeur totale de la zone avec ablation comporte une certaine variabilité qui est la somme de celles associées à chacune des deux tôles, soit $2(\sigma_1 + \sigma_2)$

- Par comparaison, dans le procédé selon l'invention, l'ablation est réalisée en prenant un plan de référence unique, le plan médian 51, et l'opération d'ablation est réalisée en une étape unique, si bien que la variabilité de la largeur totale de la zone avec ablation dans le sens longitudinal est égale à $(\sigma_1 + \sigma_2)$, soit une réduction de moitié par rapport à la technique de l'art antérieur. Des mesures de largeur de la zone totale d'ablation réalisées à différentes positions le long d'un joint soudé mettent en évidence que celle-ci varie de moins de 10%.

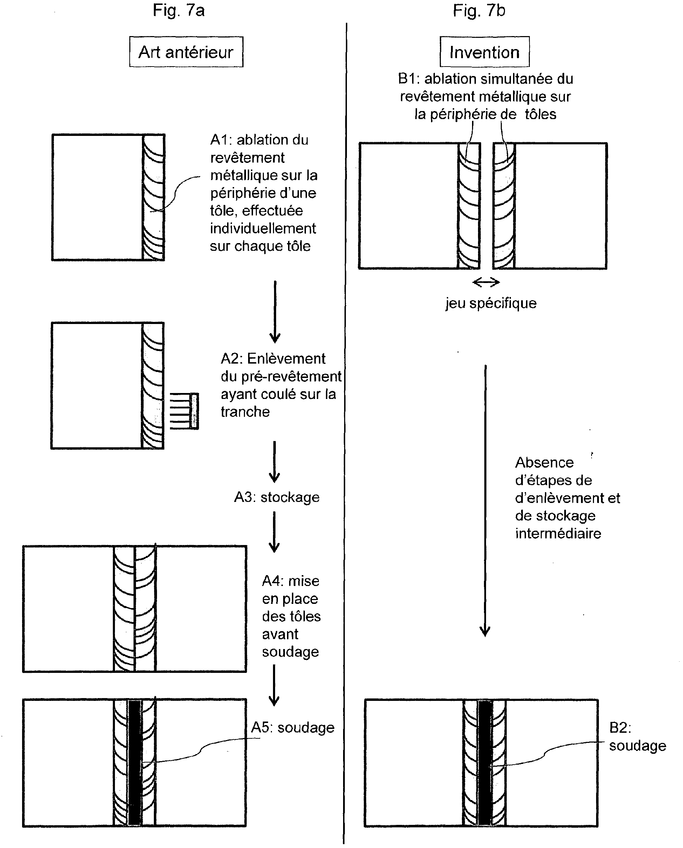

En synthèse, on présente schématiquement aux figures 7a et b la comparaison des étapes du procédé conventionnel de fabrication de flans soudés prérevêtus d'un revêtement métallique avec celui selon l'invention: Dans le cas du procédé conventionnel (figure 7a), l'ablation du pré-revêtement métallique est effectué sur la périphérie de chaque tôle, cette opération étant effectuée individuellement sur chaque tôle (étape A1) On élimine ensuite (étape A2) le pré-revêtement ayant coulé sur la tranche, résultant de l'étape A1. Après un stockage intermédiaire des tôles (étape A3), celles-ci sont mises en place en vue de leur assemblage par soudage (étape A4) Après cette mise en place, il n'existe pas de symétrie entre les structures de solidification dans les zones d'ablation périphériques, ces structures se trouvant positionnés de façon aléatoire par rapport au plan médian d'accostage des tôles. Ces tôles sont ensuite soudées (étape A5)

Dans le cas du procédé selon l'invention (figure 7b), on ôte de manière simultanée le pré-revêtement métallique sur la périphérie de tôles placées en regard, un jeu spécifique étant maintenu entre les tôles (étape B1) Cette opération produit une situation où les structures de solidification sont identiques, symétriquement de part et d'autre du plan médian d'accostage. Puis, sans étape intermédiaire, on assemble immédiatement les tôles ainsi préparées (étape B2)

On voit donc que les joints soudés réalisés selon le procédé conventionnel, et selon l'invention, diffèrent par les caractéristiques morphologiques dans les zones de solidification à proximité immédiate du métal fondu de soudage.

A titre d'exemple non limitatif, les modes de réalisation suivants vont illustrer des avantages conférés par l'invention.

Exemple :

On a approvisionné des tôles de 1,2 mm d'épaisseur d'acier ayant pour composition en poids : 0,23% de C, 1,19% de Mn, 0,014% de P, 0,001% de S, 0,27% de Si, 0,028% d'Al, 0,034% de Ti, 0,003% de B, 0,18% de Cr, le reste étant du fer et des impuretés résultant de l'élaboration. Ces flans comportent un pré-revêtement de 30 micromètres d'épaisseur sur chaque face. Ce pré-revêtement est constitué d'une couche intermétallique de 5 micromètres d'épaisseur en contact avec le substrat d'acier, contenant en poids 50% en aluminium, 40% en fer et 10% en silicium. Cette couche d'alliage intermétallique résulte de la réaction entre le substrat en acier et le bain d'alliage d'aluminium. La couche intermétallique est surmontée par une couche métallique de 25 micromètres d'épaisseur, contenant en poids 9% de silicium, 3% de fer, le solde étant de l'aluminium et des impuretés inévitables.

Ces tôles ont une dimension de 400 mm x 800 mm. Le soudage est destiné à être effectué sur les bords longs de 400mm.

On a placé deux de ces tôles de façon à ce que le jeu entre leurs bords en regard soit de 0,1 mm. On a ensuite réalisé une ablation de la couche métallique à la périphérie de ces tôles, grâce à un Laser pulsé de puissance moyenne 800W. Cette ablation est réalisée simultanément par deux faisceaux sur chacune des faces opposées de la tôle. Les tôles sont animées d'un mouvement de déplacement par rapport au faisceau à une vitesse constante V = 6 m/mn. Chacun des faisceaux est focalisé de façon à obtenir une tâche focale rectangulaire de 2mm x 0,5mm, la distance de 2 mm s'étendant dans le sens transversal par rapport au plan médian des deux tôles. On créée de la sorte simultanément deux tôles dont la périphérie se trouve dépourvue de la couche métallique sur une largeur pratiquement de 1 mm sur chacune des tôles. Le guidage de cette opération d'ablation est réalisé grâce à un capteur détectant la position du plan médian entre les deux tôles, placé immédiatement en amont par rapport aux deux faisceaux Laser pulsés d'ablation, à une position notée xo. Ce capteur est situé à une distance di d'environ 100 mm des faisceaux d'ablation. Au niveau du capteur, les coordonnées (xo, yo) de la position du plan médian sont enregistrées à un instant to par un moyen informatique. Les tôles se déplaçant à une vitesse v, cette position de plan arrive à la hauteur

$$t_1 = t_0 + \frac{d1}{V}$$

des faisceaux pulsés d'ablation à un instant . Grâce à un dispositif de déviation des faisceaux Laser, on adapte la position précise de l'impact des faisceaux Laser sur les tôles qui intervient au moment $t_1$, de façon à ce que celui-ci corresponde exactement à la zone d'ablation définie à partir de la position du plan médian.

Après ablation, un faisceau Laser situé à une distance fixe $d_2$ de 200mm des faisceaux Laser pulsés, permet de réaliser un joint soudé entre ces tôles. Le soudage est réalisé avec une puissance linéaire de 0,6 kJ/cm, sous protection d'hélium, de façon à éviter des phénomènes de décarburation, d'oxydation et d'absorption d'hydrogène. La durée s'écoulant entre l'opération d'ablation et le soudage est de 2 s.

Le guidage du faisceau Laser de soudage est réalisé là encore grâce au capteur situé en amont de l'opération d'ablation. La position de plan médian enregistrée à l'instant to arrive à la hauteur du faisceau Laser

$$t_0 + \frac{(d1 + d2)}{V}$$

de soudage, à l'instant . Grâce à un dispositif de guidage optique du faisceau Laser, on adapte alors la position précise de l'impact du faisceau Laser de soudage de façon à ce que celui-ci soit centré sur la position du plan médian qui a été définie précédemment.

La figure 6a est une macrographie illustrant une vue en élévation du joint soudé Laser obtenu, où la soudure 23 est environnée de deux zones 13 et 14 où l'ablation a été réalisée simultanément. La largeur d'ablation totale 24 est de 1,92 mm en moyenne, et varie de moins de 10% le long du flan soudé.

Les figures 6b et 6c illustrent à un grandissement plus important, la surface de zones 21 et 22 disposées symétriquement de part et d'autre de la section 52a transversale au joint soudé. On constate que les rides de solidification de ces zones 21 et 22 sont bien identiques de part et d'autre du joint soudé et présentent un caractère de continuité.

Par ailleurs, on a analysé par microsonde de Castaing la teneur en aluminium de la zone soudée ainsi réalisée : celle-ci reste inférieure à 0,3%, ce qui indique bien que la quantité d'aluminium sur les faces secondaires, après l'étape d'ablation et avant le soudage, est pratiquement nulle.

Un flan soudé réalisé dans les conditions de l'invention a été ensuite chauffé dans un four jusqu'à une température de 900°C et maintenu à cette température, la durée totale de séjour dans le four étant de 6 minutes. Le flan chauffé est ensuite embouti à chaud pour former une pièce, celle-ci étant maintenue dans l'outillage de presse d'emboutissage de façon à refroidir la pièce à une vitesse supérieure à la vitesse critique de trempe martensitique de l'acier.

On constate alors que la zone soudée sur la pièce emboutie à chaud ne comporte pas de composés intermétalliques Fe-Al fragiles, et que la dureté de la zone fondue est pratiquement identique à celle du métal de base.

Ainsi l'invention permet de réaliser de façon économique des pièces de structures et de sécurité pour le domaine automobile, comportant un joint soudé, à partir de tôles aluminiées.

**Revendications**

1. Procédé de préparation de tôles destinées à la fabrication d'un flan soudé d'acier, comprenant les étapes successives selon lesquelles :

   - on approvisionne au moins une première (11)

et une seconde (12) tôles d'acier pré-revêtues, constituées d'un substrat en acier (25,26), et d'un pré-revêtement (15,16) constitué d'une couche d'alliage intermétallique (17,18) en contact avec ledit substrat en acier, surmontée d'une couche métallique d'aluminium ou d'alliage d'aluminium ou à base d'aluminium (19,20), ladite au moins une première tôle (11) comprenant une face principale (111), une face principale opposée (112), et au moins une face secondaire (71), ladite au moins une seconde tôle (12) comprenant une face principale (121), une face principale opposée (122), et au moins une face secondaire (72), puis

- on accoste lesdites au moins une première (11) et seconde (12) tôles, en laissant un jeu (31) compris entre 0,02 et 2 mm entre lesdites au moins une face secondaires (71) et (72) placées en regard, l'accostage desdites au moins une première (11) et seconde tôles (12) définissant un plan médian (51) perpendiculaire aux faces principales desdites au moins une première (11) et seconde tôle (12), puis

- on enlève par fusion et vaporisation, simultanément sur au moins ladite face principale (111) et ladite face principale (121), ladite couche d'alliage métallique (19) dans une zone périphérique (61) de ladite au moins une tôle (11), et ladite couche d'alliage métallique (20) dans une zone périphérique (62) de ladite au moins une tôle (12), lesdites zones périphériques (61) et (62) étant les zones des faces principales (111) et (121) les plus proches par rapport audit plan médian (51) situées de part et d'autre par rapport à celui-ci.

2. Procédé selon la revendication 1 **caractérisé en ce que** ledit enlèvement simultané par fusion et vaporisation est réalisé par un faisceau Laser chevauchant ledit plan médian (51).

3. Procédé de préparation selon l'une quelconque des revendications 1 ou 2, **caractérisé en ce que** la largeur de ladite zone périphérique (61) et la largeur de ladite zone périphérique (62) sont comprises entre 0,25 et 2,5 mm.

4. Procédé de préparation selon l'une quelconque des revendications 1 à 3, **caractérisé en ce que** la largeur de ladite zone périphérique (61) et la largeur de ladite zone périphérique (62) sont égales.

5. Procédé de préparation selon l'une quelconque des revendications 1 à 3, **caractérisé en ce que** la largeur de ladite zone périphérique (61) et la largeur de ladite zone périphérique (62) sont différentes.

6. Procédé de préparation selon l'une quelconque des revendications 1 à 5 **caractérisé en ce que** ledit enlèvement par fusion et vaporisation intervient simultanément sur lesdites faces principales (111), (121) et (112), (122).

7. Procédé selon l'une quelconque des revendications 1 à 6, **caractérisé en ce que** lesdites zones périphériques (61, 62) de chacune desdites au moins une première (11) et seconde tôles d'acier (12), sont dépourvues de leur couche respective d'alliage métallique (19, 20) en laissant en place leur couche respective d'alliage intermétallique (17, 18).

8. Procédé de préparation selon l'une quelconque des revendications 1 à 7, **caractérisé en ce que** lesdits substrats (25, 26) ont des compositions d'acier différentes.

9. Procédé de préparation selon l'une quelconque des revendications 1 à 8, **caractérisé en ce que** lesdits pré-revêtements (15,16) ont des épaisseurs différentes.

10. Procédé de préparation selon l'une quelconque des revendications 1 à 9, **caractérisé en ce que** ladite couche d'alliage métallique (19,20) dudit pré-revêtement (15,16) comprend, les teneurs étant exprimées en poids, entre 8 et 11% de silicium, entre 2 et 4 % en fer, le reste de la composition étant de l'aluminium et des impuretés inévitables.

11. Procédé de préparation selon l'une quelconque des revendications 1 à 10, **caractérisé en ce que** ledit jeu (31) est supérieur à 0,04 mm.

12. Procédé de préparation selon l'une quelconque des revendications 1 à 10, **caractérisé en ce que** ledit jeu (31) est supérieur à 0,06 mm.

13. Procédé de fabrication d'un flan soudé, **caractérisé en ce qu'**on approvisionne au moins une première (11) et une seconde (12) tôles préparées par un procédé selon l'une quelconque des revendications 1 à 12, et en **en ce qu'**une opération de soudage desdites au moins une première tôle (11) et au moins une seconde tôle (12) intervient dans la zone dudit enlèvement par fusion et vaporisation, suivant un plan défini par ledit plan médian (51), moins d'une minute après ladite opération d'enlèvement par fusion et vaporisation sur lesdites au moins une première tôle (11) et au moins une seconde tôle (12).

14. Procédé de fabrication selon la revendication 13, **caractérisé en ce que** ladite opération de soudage est réalisée par au moins un faisceau Laser (95).

15. Procédé de fabrication selon l'une quelconque des revendications 13 ou 14, **caractérisé en ce que** ladite opération de soudage est réalisée simultanément par deux faisceaux Laser, l'un effectuant un soudage du côté desdites faces principales (111) et (121), l'autre effectuant un soudage du côté desdites faces principales opposées (112) et (122).

**16.** Procédé de fabrication selon l'une quelconque des revendications 13 à 15, **caractérisé en ce que** ledit enlèvement par fusion et vaporisation est réalisé grâce à un faisceau Laser (80), et que les dispositifs permettant de réaliser ledit enlèvement et ladite opération de soudage, sont combinés au sein d'un équipement dont la vitesse relative de déplacement par rapport à ladite au moins une première tôle (11) et ladite au moins une seconde tôle (12), est identique.

**17.** Procédé de fabrication selon l'une quelconque des revendications 14 à 16, **caractérisé en ce que** ladite opération de soudage est réalisée en utilisant simultanément au moins un faisceau Laser (95) et un fil d'apport (82).

**18.** Procédé de fabrication selon l'une quelconque des revendications 14 à 17, **caractérisé en ce que** ladite étape d'enlèvement est guidée à l'aide d'un dispositif de suivi dudit plan médian (51), que les coordonnées (x-y) définissant la localisation dudit plan (51) à un instant t, sont enregistrées par un moyen informatique, et sont utilisées pour guider ladite opération de soudage intervenant ultérieurement.

**19.** Procédé de fabrication selon l'une quelconque des revendications 13 à 16, **caractérisé en ce que** ladite étape d'enlèvement est guidée à l'aide d'un premier dispositif de suivi dudit plan médian (51), et que le guidage dudit soudage est réalisé au moyen d'un second dispositif de suivi dudit plan médian, distinct dudit premier dispositif.

**20.** Procédé de fabrication selon l'une quelconque des revendications 13 à 19, **caractérisé en ce que** lesdites tôles 11 et 12 sont bridées par un dispositif de bridage (98) durant ladite opération d'enlèvement par fusion et vaporisation, ledit bridage étant maintenu constamment jusqu'à ladite opération de soudage et au moins pendant ladite opération de soudage, par ledit dispositif (98)

**21.** Procédé de fabrication d'une pièce durcie sous presse à partir d'un flan soudé, comprenant les étapes successives selon lesquelles :

- on approvisionne au moins un flan soudé fabriqué selon l'une quelconque des revendications 13 à 20 puis,
- on chauffe ledit au moins un flan soudé de manière à former, par alliation entre ledit substrat d'acier (25, 26) et ledit pré-revêtement (15, 16)

un composé allié intermétallique, et de manière à conférer une structure partiellement ou totalement austénitique audit substrat (25, 26), puis
- on met en forme à chaud ledit au moins un flan soudé pour obtenir une pièce, puis
- on refroidit ladite pièce avec une vitesse suffisante pour former au moins partiellement de la martensite ou de la bainite dans ledit substrat (25, 26), obtenant ainsi un durcissement sous presse.

**22.** Procédé de fabrication selon la revendication 21, **caractérisé en ce que** ladite mise en forme à chaud dudit au moins un flan soudé est réalisée par une opération d'emboutissage à chaud.

**23.** Flan soudé réalisé par l'assemblage d'au moins une première (11) et une seconde (12) tôle d'acier prérevêtues, constituées d'un substrat en acier (25,26), et d'un pré-revêtement (15,16) constitué d'une couche d'alliage intermétallique (17,18) en contact avec ledit substrat en acier, surmontée d'une couche métallique d'aluminium, ou d'alliage d'aluminium ou à base d'aluminium (19,20), ladite au moins une première tôle (11) comprenant une face principale (111), une face principale opposée (112), ladite au moins une seconde tôle (12) comprenant une face principale (121) et une face principale opposée (122), ladite couche d'alliage métallique (19) étant ôtée par fusion et vaporisation dans une zone périphérique (61) de ladite au moins une tôle (11), et ladite couche d'alliage métallique (20) dans une zone périphérique (62) de ladite au moins une tôle (12), ledit flan soudé comportant au moins un joint soudé (52) définissant un plan médian (51) perpendiculaire aux faces principales desdites au moins une première (11) et seconde tôle (12), et des sections transversales (52 a), (52b),... (52n) perpendiculaires audit plan médian (51), **caractérisée en ce que** la somme de la largeur desdites zones périphériques (61) et (62) varie de moins de 10% le long dudit joint soudé.

**24.** Flan soudé selon la revendication 23, **caractérisé en ce que** ladite couche d'alliage métallique (19,20) dudit pré-revêtement (15,16) comprend, les teneurs étant exprimées en poids, entre 8 et 11% de silicium, entre 2 et 4 % en fer, le reste de la composition étant de l'aluminium et des impuretés inévitables.

**25.** Dispositif de fabrication de flans soudés comprenant :

- un dispositif d'approvisionnement (91) d'au moins une première (11) et une seconde (12) tôles d'acier pré-revêtues d'aluminium, ou d'alliage d'aluminium, ou d'alliage à base d'aluminium,
- un dispositif d'accostage (92) desdites tôles, de façon à obtenir un plan médian (51) entre lesdites tôles (11,12),

- un dispositif de bridage (98) desdites tôles,
- au moins une source permettant d'obtenir un faisceau Laser (80) pour ôter par fusion et vaporisation la couche métallique d'aluminium, ou d'alliage à d'aluminium ou à base d'aluminium, simultanément sur une zone périphérique (61, 62) desdites au moins une première (11) et seconde (12) tôles,
- au moins un dispositif de guidage (94) permettant de positionner ledit faisceau Laser (80) par rapport audit plan médian (51), et
- un dispositif de soudage desdites tôles (11,12), dans la zone d'enlèvement de la couche métallique d'aluminium (61, 62), ou d'alliage d'aluminium ou d'alliage à base d'aluminium, de façon à obtenir un joint soudé.

26. Dispositif selon la revendication 25, dans lequel le soudage desdites tôles (11,12) intervient moins d'une minute après l'opération d'enlèvement par fusion et vaporisation de la couche métallique d'aluminium (61, 62), ou d'alliage d'aluminium ou à base d'aluminium.

27. Dispositif selon la revendication 25 ou 26, dans lequel le dispositif de soudage est un dispositif de soudage par faisceau Laser.

28. Dispositif selon la revendication 27, dans lequel le dispositif de soudage est un dispositif de soudage par faisceau Laser associé à un fil d'apport.

29. Dispositif selon la revendication 28, dans lequel le fil d'apport a une composition différente de celle des compositions desdites tôles (11, 12).

30. Dispositif selon la revendication 28 ou 29, dans lequel le dispositif de soudage est un dispositif de soudage hybride Laser-TIG ou un dispositif de soudage hybride Laser-MIG.

31. Utilisation d'une pièce d'acier fabriquée selon la revendication 21 ou 22 pour la fabrication de pièces de structures, anti-intrusion ou d'absorption de chocs, dans des véhicules notamment automobiles.

Fig. 1

Fig. 2

Figure 3

Fig. 4

Fig. 5

Fig. 6a

Fig. 6b

Fig. 6c

Fig. 7a | Fig. 7b

Art antérieur | Invention

B1: ablation simultanée du
revêtement métallique sur
la périphérie de tôles

A1: ablation du
revêtement
métallique sur la
périphérie d'une
tôle, effectuée
individuellement
sur chaque tôle

⟷
jeu spécifique

A2: Enlèvement
du pré-revêtement
ayant coulé sur la
tranche

A3: stockage

Absence
d'étapes de
d'enlèvement et
de stockage
intermédiaire

A4: mise
en place
des tôles
avant
soudage

A5: soudage

B2:
soudage

Europäisches
Patentamt

European
Patent Office

Office européen
des brevets

**RAPPORT DE RECHERCHE EUROPEENNE**

Numéro de la demande

EP 22 15 7503

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | WO 2013/014512 A1 (ARCELORMITTAL INVESTIGACION Y DESARROLLO SL ; L. CRETTEUR ET AL) 31 janvier 2013 (2013-01-31) | 23,24 | INV. B23K26/26 B23K26/32 B23K26/30 |
| Y | * page 14, alinéa 8 – page 16, alinéa 8; figures * | 1-22, 25-31 | B23K26/322 B23K26/60 B23K9/173 |
| Y | JP H06 246475 A (NIPPON STEEL CORP) 6 septembre 1994 (1994-09-06) | 1-22,31 | B23K26/211 B23K26/348 |
| A | * abrégé; figures * | 25-30 | B23K26/361 B23K26/40 |
| Y | JP 2005 169444 A (TOYOTA MOTOR CORP) 30 juin 2005 (2005-06-30) | 25-30 | B23K28/02 B23K9/167 |
| A | * abrégé; figures * | 1-22 | |
| X | US 2014/003860 A1 (J. J. EVANGELISTA ET AL) 2 janvier 2014 (2014-01-02) | 23,24,31 | ADD. B23K101/00 B23K101/18 |
| A | * alinéas [0020] – [0021], [0025] – [0026], [0051]; figures 2-6,9 * | 1-22, 26-30 | B23K101/34 |

DOMAINES TECHNIQUES RECHERCHES (IPC)

B23K

Le présent rapport a été établi pour toutes les revendications

| Lieu de la recherche | Date d'achèvement de la recherche | Examinateur |
|---|---|---|
| Munich | 28 juin 2022 | Jeggy, Thierry |

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

**EP 22 15 7503**

| | DOCUMENTS CONSIDERES COMME PERTINENTS | | | |
|---|---|---|---|
| Catégorie | Citation du document avec indication, en cas de besoin, des parties pertinentes | Revendication concernée | **CLASSEMENT DE LA DEMANDE (IPC)** |
| | | | **B23K103/04**<br>**B23K103/08**<br>**B23K103/00** |
| | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| **Munich** | **28 juin 2022** | **Jeggy, Thierry** |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
..............................................................................
& : membre de la même famille, document correspondant

EPO FORM 1503 03.82 (P04C02)

page 2 de 2

EP 4 039 403 A1

## ANNEXE AU RAPPORT DE RECHERCHE EUROPEENNE
## RELATIF A LA DEMANDE DE BREVET EUROPEEN NO.

EP 22 15 7503

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-06-2022

| Document brevet cité au rapport de recherche | Date de publication | Membre(s) de la famille de brevet(s) | Date de publication |
|---|---|---|---|
| WO 2013014512 A1 | 31-01-2013 | BR 112014001793 A2 | 21-02-2017 |
| | | CA 2843169 A1 | 31-01-2013 |
| | | CA 2925627 A1 | 31-01-2013 |
| | | CN 103917329 A | 09-07-2014 |
| | | EP 2736672 A1 | 04-06-2014 |
| | | ES 2553437 T3 | 09-12-2015 |
| | | HU E025786 T2 | 30-05-2016 |
| | | JP 6132841 B2 | 24-05-2017 |
| | | JP 2014529007 A | 30-10-2014 |
| | | KR 20140050690 A | 29-04-2014 |
| | | PL 2736672 T3 | 31-03-2016 |
| | | RU 2014107013 A | 10-09-2015 |
| | | UA 108704 C2 | 25-05-2015 |
| | | US 2015030382 A1 | 29-01-2015 |
| | | US 2017304952 A1 | 26-10-2017 |
| | | US 2017341187 A1 | 30-11-2017 |
| | | WO 2013014481 A1 | 31-01-2013 |
| | | WO 2013014512 A1 | 31-01-2013 |
| | | ZA 201400542 B | 29-10-2014 |
| JP H06246475 A | 06-09-1994 | AUCUN | |
| JP 2005169444 A | 30-06-2005 | AUCUN | |
| US 2014003860 A1 | 02-01-2014 | CN 104395030 A | 04-03-2015 |
| | | EP 2866966 A1 | 06-05-2015 |
| | | JP 6034490 B2 | 30-11-2016 |
| | | JP 2015525677 A | 07-09-2015 |
| | | KR 20150036280 A | 07-04-2015 |
| | | MX 353799 B | 30-01-2018 |
| | | US 2014003860 A1 | 02-01-2014 |
| | | US 2017173734 A1 | 22-06-2017 |
| | | WO 2014005041 A1 | 03-01-2014 |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- EP 971044 A
- EP 2007545 A
- WO 2013014512 A